# EUROPEAN PATENT APPLICATION

(11) **EP 4 668 657 A1**
(43) Date of publication of application: **24.12.2025**
(21) Application number: 24784323.8
(22) Date of filing: 03.04.2024
(51) Int. Cl.: H04L 5/00

(54) **RESOURCE CONFIGURATION METHOD FOR REFERENCE SIGNAL, AND RELATED APPARATUS**

(30) Priority: 07.04.2023 CN 202310388059
(71) Applicant: Huawei Technologies Co., Ltd., Shenzhen, Guangdong 518129 (CN)
(72) Inventor: WANG, Han, Shenzhen, Guangdong 518129 (CN); HUANG, Su, Shenzhen, Guangdong 518129 (CN)
(74) Representative: Maiwald GmbH
(86) International application number: PCT/CN2024/085721
(87) International publication number: WO 2024/208241

(57) **Abstract**

This application provides a reference signal resource configuration method and a related apparatus. The method includes: reporting capability information of a terminal device to a network device, where the capability information includes a capability of the terminal device to transmit a carrier aggregation CA SRS in an inactive state; and receiving configuration information sent by the network device, where the configuration information is used to configure a resource for the terminal device to transmit the CA SRS in the inactive state, and the configuration information is determined based on the capability information. According to technical solutions provided in this application, resource configuration for the CA SRS in the inactive state is implemented.

## Description

This application claims priority to Chinese Patent Application No. 202310388059.1, filed with the China National Intellectual Property Administration on April 7, 2023 and entitled "REFERENCE SIGNAL RESOURCE CONFIGURATION METHOD AND RELATED APPARATUS", which is incorporated herein by reference in its entirety.

### TECHNICAL FIELD

This application relates to the field of wireless communication technologies, and in particular, to a reference signal resource configuration method and a related apparatus.

### BACKGROUND

Similar to long term evolution (long term evolution, LTE), a plurality of new radio (new radio, NR) carriers may be aggregated and transmitted in parallel to a same device or transmitted from a same device, to support a wider bandwidth and a corresponding higher data transmission rate. In an NR system, a carrier aggregation (carrier aggregation, CA) sounding reference signal (sounding reference signal, SRS) is configured and sent when a terminal device is in a connected state. When the terminal device is in an inactive state, because there is only one camped cell, a CA SRS cannot be configured or sent through a CA SRS configuration procedure in the connected state. Therefore, there is an urgent need to address the problem of how to configure the CA SRS in the inactive state.

### SUMMARY

Embodiments of this application provide a reference signal resource configuration method and a related apparatus, to implement resource configuration for a CA SRS in an inactive state.

According to a first aspect, this application provides a reference signal resource configuration method. The method may be applied to a terminal device, an apparatus (for example, a chip, a chip system, or a circuit) in a terminal device, or an apparatus that can be used together with a terminal device. The following uses an example in which the method is applied to a terminal device for description. The method may include: The terminal device reports capability information of the terminal device to a network device, where the capability information includes a capability of the terminal device to transmit a CA SRS in an inactive state; and the terminal device receives configuration information sent by the network device, where the configuration information is used to configure a resource for the terminal device to transmit the CA SRS in the inactive state, and the configuration information is determined based on the capability information.

In the solution provided in this application, different from a case in which the terminal device cannot configure the resource for the terminal device to transmit the CA SRS in the inactive state, in this embodiment of this application, the terminal device may configure, based on the configuration information sent by the network device, the resource for the terminal device to transmit the CA SRS in the inactive state. The configuration information is configuration information CACA that is of the resource for the terminal device to transmit the CA SRS in the inactive state and that is newly added by the network device.

In a possible implementation, the CA SRS is used for positioning.

In a possible implementation, the configuration information is carried in a radio resource control (radio resource control, RRC) release release message.

In a possible implementation, the configuration information includes first configuration information and second configuration information, the first configuration information is used to configure a carrier frequency for carrying the CA SRS, the second configuration information is used to configure the resource for the CA SRS, and the resource for the CA SRS corresponds to the carrier frequency for carrying the CA SRS. The method further includes: transmitting, based on the configuration information, the CA SRS at the carrier frequency for carrying the CA SRS.

In a possible implementation, there are at least two carrier frequencies for carrying the CA SRS, and different carrier frequencies for carrying the CA SRS correspond to different resources for the CA SRS.

In a possible implementation, the carrier frequency for carrying the CA SRS includes at least two uplink carrier frequencies, and the at least two uplink carrier frequencies belong to a same frequency band.

In a possible implementation, the at least two uplink carrier frequencies in the same frequency band are contiguous in frequency domain.

In a possible implementation, the at least two uplink carrier frequencies are used for a CA SRS for positioning.

In a possible implementation, the first configuration information is further used to configure at least two uplink carrier frequencies, at least one uplink carrier frequency in the at least two uplink carrier frequencies is a frequency corresponding to an uplink carrier of a cell on which the terminal device camps, and the at least one uplink carrier frequency is used for data transmission.

In a possible implementation, the first configuration information is further used to configure at least two uplink carrier frequencies, and the at least two uplink carrier frequencies are frequencies corresponding to positioning-dedicated uplink carriers.

In a possible implementation, the first configuration information is further used to configure at least two uplink carrier frequencies, and the at least two uplink carrier frequencies are used for a physical random access channel (physical random access channel, PRACH).

In a possible implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for a PRACH.

In a possible implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for data transmission.

In a possible implementation, the configuration information includes first configuration information and second configuration information, the first configuration information is used to configure a carrier that carries the CA SRS, the second configuration information is used to configure the resource for the CA SRS, and the resource for the CA SRS corresponds to the carrier that carries the CA SRS. The method further includes: transmitting, based on the configuration information, the CA SRS on the carrier that carries the CA SRS.

In the solution provided in this application, the network device configures related information of the carrier and related information of the resource for the CA SRS, where the carrier is used to carry the CA SRS, and the terminal device sends the CA SRS to the network device on the carrier as indicated by the configuration information, to transmit the CA SRS in the inactive state.

In a possible implementation, there are at least two carriers that carry the CA SRS, and different carriers that carry the CA SRS correspond to different resources for the CA SRS.

In a possible implementation, the second configuration information is carried in the first configuration information.

In a possible implementation, the first configuration information and the second configuration information are carried in parallel in the configuration information.

In a possible implementation, the carrier that carries the CA SRS includes at least two uplink carriers, and the at least two uplink carriers belong to a same frequency band.

In a possible implementation, the at least two uplink carriers in the same frequency band are contiguous in frequency domain.

In a possible implementation, the at least two uplink carriers are used for a CA SRS for positioning.

In a possible implementation, the first configuration information is further used to configure at least two uplink carriers, at least one uplink carrier in the at least two uplink carriers is an uplink carrier of a cell on which the terminal device camps, and the at least one uplink carrier is used for data transmission.

In a possible implementation, the first configuration information is further used to configure at least two uplink carriers, and the at least two uplink carriers are positioning-dedicated uplink carriers.

In a possible implementation, the first configuration information is further used to configure at least two uplink carriers, and the at least two uplink carriers are used for a physical random access channel (physical random access channel, PRACH).

In a possible implementation, the first configuration information is further used to configure at least two uplink carriers, at least one uplink carrier in the at least two uplink carriers is used for the CA SRS for positioning, and at least one uplink carrier in the at least two uplink carriers is used for a PRACH.

In a possible implementation, the first configuration information is further used to configure at least two uplink carriers, at least one uplink carrier in the at least two uplink carriers is used for the CA SRS for positioning, and at least one uplink carrier in the at least two uplink carriers is used for data transmission.

In a possible implementation, the first configuration information includes one or more of the following: frequency channel number information, a bandwidth, a subcarrier spacing (subcarrier spacing, SCS), and bandwidth part (bandwidth part, BWP) information.

In a possible implementation, when the frequency channel number information is frequency channel number information of a normal uplink (normal uplink, NUL), the first configuration information is used to configure an NUL carrier that carries the CA SRS, or the first configuration information is used to configure a frequency corresponding to an NUL carrier that carries the CA SRS; or when the frequency channel number information is frequency channel number information of a supplementary uplink (supplementary uplink, SUL), the first configuration information is used to configure an SUL carrier that carries the CA SRS, or the first configuration information is used to configure a frequency corresponding to an SUL carrier that carries the CA SRS.

In a possible implementation, the configuration information further includes a first parameter, and the first parameter indicates available time of a timing advance (timing advance, TA) of the carrier that carries the CA SRS; or the first parameter indicates available time of a TA of the carrier frequency for carrying the CA SRS.

In a possible implementation, there are at least two carriers that carry the CA SRS, each carrier that carries the CA SRS corresponds to one piece of first configuration information, and the first parameter corresponds to the at least two carriers that carry the CA SRS.

In a possible implementation, there are at least two carrier frequencies for carrying the CA SRS, each carrier frequency for carrying the CA SRS corresponds to one piece of first configuration information, and the first parameter corresponds to the at least two carrier frequencies for carrying the CA SRS.

In the solution provided in this application, the first parameter is configured independently of the first configuration information, that is, the first parameter does not need to be configured in the first configuration information, thereby reducing overheads and complexity of a signaling procedure corresponding to the first configuration information.

In a possible implementation, there are at least two first parameters, each first parameter corresponds to one carrier that carries the CA SRS, and the at least two first parameters belong to a same timing advance group (timing advance group, TAG).

In the solution provided in this application, there are the at least two first parameters, and first parameters corresponding to different carriers (the carriers are carriers that carry the CA SRS) belong to a same TAG, so that configuration between different carriers is simplified.

In a possible implementation, there are at least two first parameters, each first parameter corresponds to one carrier frequency for carrying the CA SRS, and the at least two first parameters belong to a same TAG.

In a possible implementation, there are at least two carriers that carry the CA SRS, the configuration information further includes a second parameter, the second parameter is used to determine whether to send the CA SRS, and the second parameter corresponds to the at least two carriers that carry the CA SRS.

In the solution provided in this application, the second parameter is configured independently of the first configuration information, that is, the second parameter does not need to be configured in the first configuration information, thereby reducing overheads and complexity of a signaling procedure corresponding to the first configuration information.

In a possible implementation, there are at least two carrier frequencies for carrying the CA SRS, the configuration information further includes a second parameter, the second parameter is used to determine whether to send the CA SRS, and the second parameter corresponds to the at least two carrier frequencies for carrying the CA SRS.

In a possible implementation, the second parameter is associated with a reference signal, and a type of the reference signal includes one or more of the following: a synchronization signal/physical broadcast channel block (synchronization signal/physical broadcast channel block, SSB), a tracking reference signal (tracking reference signal, TRS), a channel state information-reference signal (channel state information-reference signal, CSI-RS), and a non-cell-defining synchronization signal/physical broadcast channel block (non-cell-defining SS/PBCH block, NCD-SSB).

In a possible implementation, the CA SRS is associated with one or more of the following reference signals: the SSB, the TRS, the CSI-RS, and the NCD-SSB, and a sending parameter of the CA SRS is determined based on the reference signal associated with the CA SRS.

In a possible implementation, the sending parameter includes one or more of the following: whether the CA SRS is sent, transmit power of the CA SRS, and a sending timing of the CA SRS.

In a possible implementation, the capability information includes information about a frequency band combination supported by the terminal device, the information about the frequency band combination is carried in first indication information and/or second indication information, the first indication information corresponds to one or more frequency bands, the second indication information corresponds to one or more frequency band combinations, and the frequency band combination includes one or more frequency bands.

In a possible implementation, the capability information further includes information about a maximum aggregated bandwidth of a frequency band and information about a quantity of contiguous carriers of the frequency band, and both the information about the maximum aggregated bandwidth of the frequency band and the information about the quantity of contiguous carriers of the frequency band are carried in third indication information.

In a possible implementation, the third indication information is carried in the first indication information; or the third indication information is carried in the second indication information.

In a possible implementation, the capability information further includes a capability of the terminal device to transmit the CA SRS in a connected state, and the configuration information is further used to configure a resource for the terminal device to transmit the CA SRS in the connected state.

In the solution provided in this application, the terminal device may simultaneously report two capabilities to the network device: the capability of the terminal device to transmit the CA SRS in the connected state and the capability of the terminal device to transmit the CA SRS in the inactive state, to configure the CA SRS in the connected state and the CA SRS in the inactive state.

In a possible implementation, the configuration information further includes third configuration information and fourth configuration information, the third configuration information is used to configure a secondary cell (secondary cell, SCell) that carries the CA SRS, the third configuration information includes the BWP information, the fourth configuration information is used to configure the resource for the CA SRS, and the resource for the CA SRS corresponds to the secondary cell. The method further includes: transmitting the CA SRS in the SCell based on the configuration information.

According to a second aspect, this application provides a reference signal resource configuration method. The method may be applied to a network device, an apparatus (for example, a chip, a chip system, or a circuit) in a network device, or an apparatus that can be used together with a network device. The following uses an example in which the method is applied to a network device for description. The method may include: The network device receives capability information reported by a terminal device, where the capability information includes a capability of the terminal device to transmit a CA SRS in an inactive state; and the network device sends configuration information to the terminal device, where the configuration information is used to configure a resource for the terminal device to transmit the CA SRS in the inactive state, and the configuration information is determined based on the capability information.

In the solution provided in this application, different from a case in which the terminal device cannot configure the resource for the terminal device to transmit the CA SRS in the inactive state, in this embodiment of this application, the network device adds, to the configuration information based on the capability information reported by the terminal device, a related configuration of the resource for the terminal device to transmit the CA SRS in the inactive state, so that, the terminal device can configure, based on the configuration information sent by the network device, the resource for the terminal device to transmit the CA SRS in the inactive state.

It should be understood that an execution body of the second aspect may be the network device, and specific content of the second aspect corresponds to content of the first aspect. For corresponding features of the second aspect and beneficial effect achieved in the second aspect, refer to descriptions of the first aspect. To avoid repetition, detailed descriptions are properly omitted herein.

In a possible implementation, the CA SRS is used for positioning.

In a possible implementation, the configuration information is carried in an RRC release message.

In a possible implementation, the configuration information includes first configuration information and second configuration information, the first configuration information is used to configure a carrier frequency for carrying the CA SRS, the second configuration information is used to configure the resource for the CA SRS, and the resource for the CA SRS corresponds to the carrier frequency for carrying the CA SRS. The method further includes: transmitting, based on the configuration information, the CA SRS at the carrier frequency for carrying the CA SRS.

In a possible implementation, there are at least two carrier frequencies for carrying the CA SRS, and different carrier frequencies for carrying the CA SRS correspond to different resources for the CA SRS.

In a possible implementation, the carrier frequency for carrying the CA SRS includes at least two uplink carrier frequencies, and the at least two uplink carrier frequencies belong to a same frequency band.

In a possible implementation, the at least two uplink carrier frequencies in the same frequency band are contiguous in frequency domain.

In a possible implementation, the at least two uplink carrier frequencies are used for a CA SRS for positioning.

In a possible implementation, the first configuration information is further used to configure at least two uplink carrier frequencies, at least one uplink carrier frequency in the at least two uplink carrier frequencies is a frequency corresponding to an uplink carrier of a cell on which the terminal device camps, and the at least one uplink carrier frequency is used for data transmission.

In a possible implementation, the first configuration information is further used to configure at least two uplink carrier frequencies, and the at least two uplink carrier frequencies are frequencies corresponding to positioning-dedicated uplink carriers.

In a possible implementation, the first configuration information is further used to configure at least two uplink carrier frequencies, and the at least two uplink carrier frequencies are used for a physical random access channel (physical random access channel, PRACH).

In a possible implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for a PRACH.

In a possible implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for data transmission.

In a possible implementation, the configuration information includes first configuration information and second configuration information, the first configuration information is used to configure a carrier that carries the CA SRS, the second configuration information is used to configure the resource for the CA SRS, and the resource for the CA SRS corresponds to the carrier that carries the CA SRS. The method further includes: transmitting, based on the configuration information, the CA SRS on the carrier that carries the CA SRS.

In a possible implementation, there are at least two carriers that carry the CA SRS, and different carriers that carry the CA SRS correspond to different resources for the CA SRS.

In a possible implementation, the second configuration information is carried in the first configuration information.

In a possible implementation, the first configuration information and the second configuration information are carried in parallel in the configuration information.

In a possible implementation, the carrier that carries the CA SRS includes at least two uplink carriers, and the at least two uplink carriers belong to a same frequency band.

In a possible implementation, the at least two uplink carriers in the same frequency band are contiguous in frequency domain.

In a possible implementation, the at least two uplink carriers are used for a CA SRS for positioning.

In a possible implementation, the first configuration information is further used to configure at least two uplink carriers, at least one uplink carrier in the at least two uplink carriers is an uplink carrier of a cell on which the terminal device camps, and the at least one uplink carrier is used for data transmission.

In a possible implementation, the first configuration information is further used to configure at least two uplink carriers, and the at least two uplink carriers are positioning-dedicated uplink carriers.

In a possible implementation, the first configuration information is further used to configure at least two uplink carriers, and the at least two uplink carriers are used for a PRACH.

In a possible implementation, the first configuration information is further used to configure at least two uplink carriers, at least one uplink carrier in the at least two uplink carriers is used for the CA SRS for positioning, and at least one uplink carrier in the at least two uplink carriers is used for a PRACH.

In a possible implementation, the first configuration information is further used to configure at least two uplink carriers, at least one uplink carrier in the at least two uplink carriers is used for the CA SRS for positioning, and at least one uplink carrier in the at least two uplink carriers is used for data transmission.

In a possible implementation, the first configuration information includes one or more of the following: frequency channel number information, a bandwidth, an SCS, and BWP information.

In a possible implementation, when the frequency channel number information is frequency channel number information of an NUL, the first configuration information is used to configure an NUL carrier that carries the CA SRS, or the first configuration information is used to configure a frequency corresponding to an NUL carrier that carries the CA SRS; or when the frequency channel number information is frequency channel number information of an SUL, the first configuration information is used to configure an SUL carrier that carries the CA SRS, or the first configuration information is used to configure a frequency corresponding to an SUL carrier that carries the CA SRS.

In a possible implementation, the configuration information further includes a first parameter, and the first parameter indicates available time of a TA of the carrier that carries the CA SRS, or the first parameter indicates available time of a TA of the carrier frequency for carrying the CA SRS.

In a possible implementation, there are at least two carriers that carry the CA SRS, each carrier that carries the CA SRS corresponds to one piece of first configuration information, and the first parameter corresponds to the at least two carriers that carry the CA SRS.

In a possible implementation, there are at least two carrier frequencies for carrying the CA SRS, each carrier frequency for carrying the CA SRS corresponds to one piece of first configuration information, and the first parameter corresponds to the at least two carrier frequencies for carrying the CA SRS.

In a possible implementation, there are at least two first parameters, each first parameter corresponds to one carrier that carries the CA SRS, and the at least two first parameters belong to a same TAG.

In a possible implementation, there are at least two first parameters, each first parameter corresponds to one carrier frequency for carrying the CA SRS, and the at least two first parameters belong to a same TAG.

In a possible implementation, there are at least two carriers that carry the CA SRS, the configuration information further includes a second parameter, the second parameter is used to determine whether to send the CA SRS, and the second parameter corresponds to the at least two carriers that carry the CA SRS.

In a possible implementation, there are at least two carrier frequencies for carrying the CA SRS, the configuration information further includes a second parameter, the second parameter is used to determine whether to send the CA SRS, and the second parameter corresponds to the at least two carrier frequencies for carrying the CA SRS.

In a possible implementation, the second parameter is associated with a reference signal, and a type of the reference signal includes one or more of the following: an SSB, a TRS, a CSI-RS, and an NCD-SSB.

In a possible implementation, the CA SRS is associated with one or more of the following reference signals: the SSB, the TRS, the CSI-RS, and the NCD-SSB, and a sending parameter of the CA SRS is determined based on the reference signal associated with the CA SRS.

In a possible implementation, the sending parameter includes one or more of the following: whether the CA SRS is sent, transmit power of the CA SRS, and a sending timing of the CA SRS.

In a possible implementation, the capability information includes information about a frequency band combination supported by the terminal device, the information about the frequency band combination is carried in first indication information and/or second indication information, the first indication information corresponds to one or more frequency bands, the second indication information corresponds to one or more frequency band combinations, and the frequency band combination includes one or more frequency bands.

In a possible implementation, the capability information further includes information about a maximum aggregated bandwidth of a frequency band and information about a quantity of contiguous carriers of the frequency band, and both the information about the maximum aggregated bandwidth of the frequency band and the information about the quantity of contiguous carriers of the frequency band are carried in third indication information.

In a possible implementation, the third indication information is carried in the first indication information; or the third indication information is carried in the second indication information.

In a possible implementation, the capability information further includes a capability of the terminal device to transmit the CA SRS in a connected state, and the configuration information is further used to configure a resource for the terminal device to transmit the CA SRS in the connected state.

In a possible implementation, the configuration information further includes third configuration information and fourth configuration information, the third configuration information is used to configure an SCell that carries the CA SRS, the third configuration information includes the BWP information, the fourth configuration information is used to configure the resource for the CA SRS, and the resource for the CA SRS corresponds to the SCell. The method further includes: transmitting the CA SRS in the SCell based on the configuration information.

According to a third aspect, this application provides a communication apparatus. The communication apparatus may be a terminal device, an apparatus (for example, a chip, a chip system, or a circuit) in a terminal device, or a logical module or software that can implement all or some functions of a terminal device. The communication apparatus has a function of implementing the behavior in the method embodiment in the first aspect. For example, in a possible implementation, the communication apparatus includes:
a transceiver unit, configured to: report capability information of a terminal device to a network device, where the capability information includes a capability of the terminal device to transmit a CA sounding reference signal SRS in an inactive state.

The transceiver unit is configured to receive configuration information sent by the network device, where the configuration information is used to configure a resource for the terminal device to transmit the CA SRS in the inactive state, and the configuration information is determined based on the capability information.

The function may be implemented by hardware, or may be implemented by hardware executing corresponding software. The hardware or the software includes one or more modules corresponding to the foregoing function. For beneficial effect, refer to descriptions of the first aspect. Details are not described herein again.

According to a fourth aspect, this application provides a communication apparatus. The communication apparatus may be a network device, an apparatus (for example, a chip, a chip system, or a circuit) in a network device, or a logical module or software that can implement all or some functions of a network device. The communication apparatus has a function of implementing the behavior in the method instance in the second aspect. For example, in a possible implementation, the communication apparatus includes:
a transceiver unit, configured to receive capability information reported by a terminal device, where the capability information includes a capability of the terminal device to transmit a CA SRS in an inactive state.

The transceiver unit is configured to send configuration information to the terminal device, where the configuration information is used to configure a resource for the terminal device to transmit the CA SRS in the inactive state, and the configuration information is determined based on the capability information.

The function may be implemented by hardware, or may be implemented by hardware executing corresponding software. The hardware or the software includes one or more modules corresponding to the foregoing function. For beneficial effect, refer to descriptions of the second aspect. Details are not described herein again.

According to a fifth aspect, this application provides a communication apparatus. The communication apparatus may be a terminal device, or may be an apparatus (for example, a chip, a chip system, or a circuit) in a terminal device. The apparatus may include a processor, an input interface, and an output interface. The input interface is configured to receive information from a communication apparatus other than the communication apparatus, the output interface is configured to output information to a communication apparatus other than the communication apparatus, and the processor performs the reference signal resource configuration method provided in any one of the first aspect or the implementations of the first aspect.

According to a sixth aspect, this application provides a communication apparatus. The communication apparatus may be a network device, or may be an apparatus (for example, a chip, a chip system, or a circuit) in a network device. The apparatus may include a processor, an input interface, and an output interface. The input interface is configured to receive information from a communication apparatus other than the communication apparatus, the output interface is configured to output information to a communication apparatus other than the communication apparatus, and the processor performs the reference signal resource configuration method provided in any one of the second aspect or the implementations of the second aspect.

According to a seventh aspect, this application provides a computer-readable storage medium. The computer-readable storage medium stores a computer program or computer instructions. When the computer program or the computer instructions are executed by a processor, the method in any one of the first aspect and the possible implementations of the first aspect and the method in any one of the second aspect and the possible implementations of the second aspect are performed.

According to an eighth aspect, this application provides a computer program product. The computer program product includes instructions. When the instructions are executed by a processor, the method according to any one of the first aspect and the possible implementations of the first aspect and the method according to any one of the second aspect and the possible implementations of the second aspect are performed.

According to a ninth aspect, this application provides a communication apparatus. The communication apparatus includes a processor, configured to implement the method according to any one of the first aspect and the possible implementations of the first aspect and the method according to any one of the second aspect and the possible implementations of the second aspect.

In a possible implementation, the communication apparatus may further include a memory, configured to store program instructions and/or data. The communication apparatus may be a chip system. The chip system may include a chip, or may include a chip and another discrete component.

According to a tenth aspect, this application provides a communication system. The communication system includes at least one terminal device and at least one network device. When running in the communication system, the at least one terminal device and the at least one network device are configured to perform any one of the reference signal resource configuration methods according to the first aspect and the second aspect.

### BRIEF DESCRIPTION OF DRAWINGS

To describe embodiments of this application more clearly, the following briefly describes accompanying drawings used in the embodiments. It is clear that persons of ordinary skill in the art can further obtain other drawings based on these accompanying drawings without creative efforts.
FIG. 1 is a diagram of a network architecture of a communication system according to an embodiment of this application;
FIG. 2 is a diagram of a positioning network architecture based on a next-generation radio access network according to an embodiment of this application;
FIG. 3A and FIG. 3B each are a diagram of an architecture of an NR-Uu communication system according to an embodiment of this application;
FIG. 4 is a diagram of a communication positioning architecture based on a PC5 interface according to an embodiment of this application;
FIG. 5 is an interaction diagram of a reference signal resource configuration method according to an embodiment of this application;
FIG. 6 is a diagram of a structure of a communication apparatus according to an embodiment of this application;
FIG. 7 is a diagram of a structure of another communication apparatus according to an embodiment of this application; and
FIG. 8 is a diagram of a structure of still another communication apparatus according to an embodiment of this application; and
FIG. 9 is a diagram of a structure of a terminal device according to an embodiment of this application.

### DESCRIPTION OF EMBODIMENTS

The following describes technical solutions in embodiments of this application with reference to accompanying drawings in embodiments of this application. The terms "system" and "network" may be used interchangeably in embodiments of this application. Unless otherwise specified, "/" represents an "or" relationship between associated objects. For example, A/B may represent A or B. "And/or" in this application describes only an association relationship of associated objects and represents that three relationships may exist. For example, A and/or B may represent the following three cases: Only A exists, both A and B exist, and only B exists, where A and B may be singular or plural. In addition, in descriptions of this application, "a plurality of" means two or more than two unless otherwise specified. "At least one of the following items (pieces)" or a similar expression thereof indicates any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that have basically same network elements or purposes. Persons skilled in the art may understand that the terms such as "first" and "second" do not limit a quantity and an execution sequence, and the terms such as "first" and "second" do not limit a definite difference.

Reference to "an embodiment", "some embodiments", or the like described in embodiments of this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. Terms "include", "contain", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, or improvement made based on the technical solutions of this application shall fall within the protection scope of this application.

The following first describes technical terms that may appear in embodiments of this application. Terms used in implementations of this application are merely used to explain specific embodiments of this application, but are not intended to limit this application. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

### (1) Radio resource control (radio resource control, RRC) state

In a connected (connected) state, a terminal device sets up an RRC connection to a network device for data transmission.

In an idle (idle) state, the terminal device does not set up an RRC connection to the network device, and the network device does not have a context of the terminal device. If the terminal device needs to enter the connected state from the idle state, the terminal device needs to initiate an RRC connection setup procedure.

Inactive (inactive) state: The terminal device previously enters a connected state, and then the network device releases an RRC connection, but the network device and the terminal device store a context. If the terminal device needs to enter the connected state from the inactive state, the terminal device needs to initiate an RRC connection resume procedure. The RRC resume process has a shorter delay and lower signaling overheads than the RRC setup process.

### (2) CA

CA aggregates two or more component carriers (component carrier, CC) to support a larger transmission bandwidth. CA is classified into the following types:
Intra-band contiguous CA: CCs belong to a same frequency band and are contiguous in frequency domain.
Intra-band non-contiguous CA: CCs belong to a same frequency band but are non-contiguous in frequency domain.
Inter-band CA: CCs belong to different frequency bands. Therefore, the plurality of CCs are basically non-contiguous in frequency domain.

CA may be referred to as bandwidth aggregation (bandwidth aggregation).

The technical solutions in embodiments of this application may be applied to various communication systems, for example, a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions in embodiments of this application may further be applied to other communication systems, for example, a public land mobile network (public land mobile network, PLMN) system, a long term evolution-advanced (LTE advanced, LTE-A) system, a 5G system, an NR system, a machine to machine (machine to machine, M2M) system, or other future evolved communication systems. This is not limited in embodiments of this application.

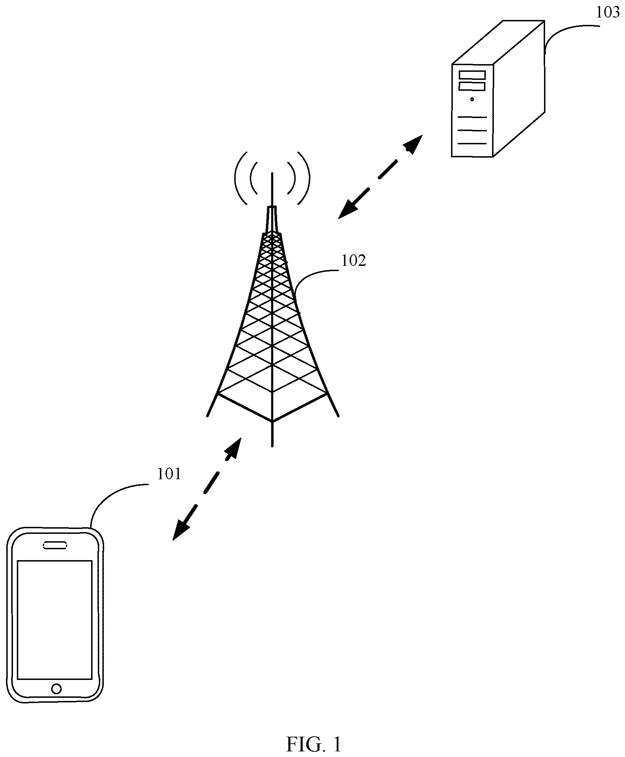

FIG. 1 is a diagram of a network architecture of a communication system according to an embodiment of this application. As shown in FIG. 1, the network architecture may include a terminal device 101, a network device 102, and a core network device 103. The network device may be connected to the network device 102 in a wireless manner, and may access the core network device 103 through the network device 102. The terminal device 101 may be fixed or mobile.

The terminal device 101 is a user-side entity configured to receive or transmit a signal. The terminal device may be deployed on land, including being deployed indoor, outdoor, handheld, or vehicle-mounted; may be deployed on the water (for example, on a ship); or may be deployed in the air (for example, on an airplane, a balloon, or a satellite). The terminal device may be a mobile phone (mobile phone), a tablet computer (pad), a computer with a wireless transceiver function, a virtual reality (virtual reality, VR) terminal device, an augmented reality (augmented reality, AR) terminal device, a wireless terminal device in industrial control, a wireless terminal device in self driving (self driving), a wireless terminal device in telemedicine (telemedicine), a wireless terminal device in a smart grid (smart grid), a wireless terminal in transportation safety (transportation safety), a wireless terminal device in a smart city (smart city), a wireless terminal in a smart home (smart home), user equipment (user equipment, UE), or the like.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements powerful functions through software support, data exchange, and cloud interaction. In a broad sense, wearable intelligent devices include full-featured and large-sized devices that can implement complete or partial functions without depending on smartphones, such as smart watches or smart glasses, and include devices that focus only on one type of application function and need to work with other devices like smartphones, for example, various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using communication technology, to implement an intelligent network for human-machine interconnection and thing-thing interconnection. In embodiments of this application, an IoT technology can implement massive connections, deep coverage, and terminal power saving by using, for example, a narrowband (narrow band, NB) technology.

The network device 102 may be an entity configured to transmit or receive a signal, or may be a device configured to communicate with the terminal device. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay node, an access point, a vehicle-mounted device, a wearable device, a network device in a 5G network, a network device in a future evolved PLMN network, or the like. This is not limited in embodiments of this application. The network device may be a device in a wireless network, for example, a radio access network (radio access network, RAN) node that connects a terminal to the wireless network. Currently, the RAN node may be, for example, a base station, a next generation NodeB (next generation NodeB, gNB), a transmission reception point (transmission reception point, TRP), an eNB, a home base station, a baseband unit (baseband unit, BBU), or an access point (access point, AP) in a Wi-Fi system. In the network structure provided in this application, the network device may be a RAN device that includes a central unit (central unit, CU) node, a distributed unit (distributed unit, DU) node, or a CU node and a DU node.

In different systems, the CU (including a CU-CP and a CU-UP) or the DU may also have different names, but persons skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the methods provided in embodiments of this application is not particularly limited in embodiments of this application, provided that a program that records code of the methods provided in embodiments of this application can be run to perform communication according to the methods provided in embodiments of this application. For example, the execution body of the methods provided in embodiments of this application may be a terminal device or a network device, or a functional module that can invoke and execute the program in a terminal device or a network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), and a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

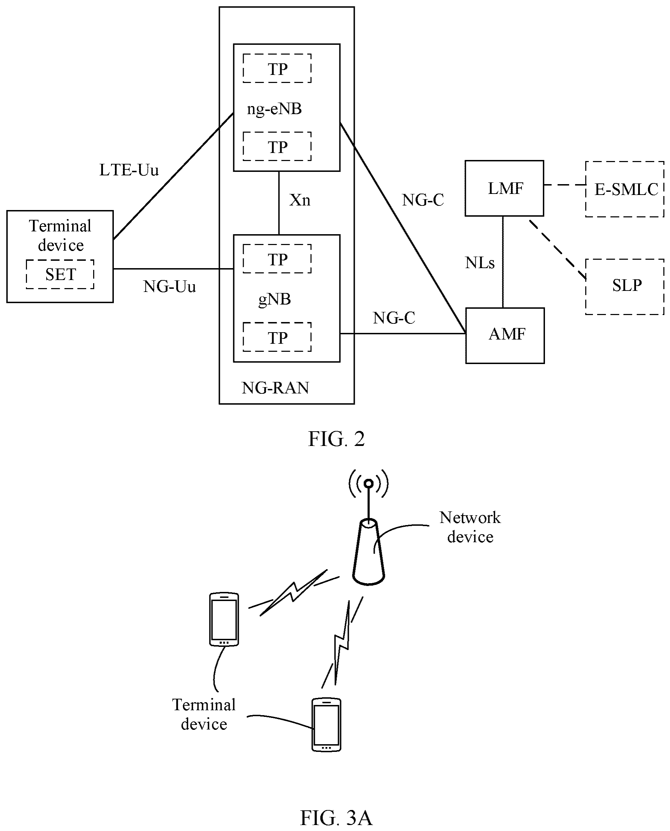

FIG. 2 is a diagram of a positioning network architecture based on a next generation radio access network (next generation radio access network, NG-RAN) according to an embodiment of this application. As shown in FIG. 2, an access and mobility management function (access and mobility management function, AMF) network element receives a positioning service request that is about a terminal device and that is initiated by another network element in the network. The AMF sends the received request to a location management function (location management function, LMF) network element, and the LMF is responsible for processing the received positioning request and initiating a related positioning procedure. The NG-RAN access network includes a 4G station ng-eNB and a 5G station gNB that are connected to a 5G core network. The NG-RAN is responsible for sending/receiving positioning reference signals and obtaining related measurement information. Each of the ng-eNB and the gNB may be communicatively connected to the AMF through an NG-C interface. The AMF may be communicatively connected to the LMF through an NLs interface. A terminal device may be communicatively connected to the ng-eNB through an LTE-Uu interface, and a secure user plane location (secure user plane location, SUPL) enabled terminal (SUPL enabled terminal, SET) may be deployed in the terminal device. The terminal device may be communicatively connected to the gNB through an NR-Uu interface. The ng-eNB may be communicatively connected to the gNB through an Xn interface.

The ng-eNB may be a device or an apparatus that is deployed in the radio access network, meets a 4G standard, and provides a wireless communication function for the terminal device. The ng-eNB may be a base station, an access point, or the like in various forms. Alternatively, the ng-eNB may be a transmission reception point (transmission reception point, TRP) that receives/sends a reference signal, a transmission measurement function (transmission measurement function, TMF), or the like.

The gNB may be a device or an apparatus that is deployed in the radio access network, meets a 5G standard, and provides a wireless communication function for the terminal device. The gNB may be a base station, an access point, or the like in various forms. Alternatively, the gNB may be a TRP, a TMF, or the like that receives/sends a reference signal.

It may be understood that a transmission point (transmission point, TP) may be deployed in both the ng-eNB and the gNB.

It may be understood that an enhanced serving mobile location center (enhanced serving mobile location center, E-SMLC) may be a network element that provides a positioning function in a 4G core network. A service location protocol (service location protocol, SLP) may be a network element that processes a secure user plane location protocol in the 4G core network.

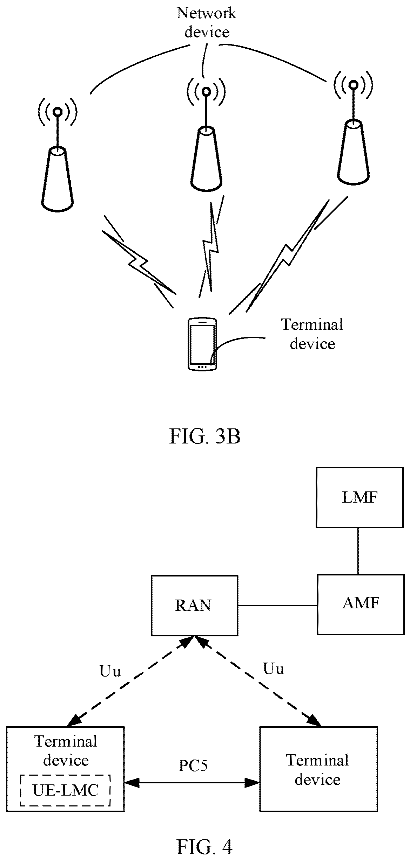

The technical solutions provided in this application may be applied to an NR-Uu communication system. FIG. 3A and FIG. 3B each are a diagram of an architecture of an NR-Uu communication system according to an embodiment of this application. The NG-Uu communication system includes one or more network devices and one or more terminal devices. As shown in FIG. 3A, one network device may transmit data or control signaling to one or more terminal devices. As shown in FIG. 3B, a plurality of network devices may also simultaneously transmit data or control signaling to one terminal device.

The technical solutions provided in this application may be further applied to a communication positioning architecture based on a PC5 interface. FIG. 4 is a diagram of a communication positioning architecture based on a PC5 interface according to an embodiment of this application. As shown in FIG. 4, each of terminal devices is communicatively connected to a RAN node through a Uu interface. The terminal devices are communicatively connected to each other through a PC5 interface. The RAN node is communicatively connected to an AMF, and the AMF is communicatively connected to an LMF.

A user equipment-location management component (user equipment-location management component, UE-LMC) may be a component or an application that is deployed in the terminal device and that has some LMFs, and is configured to support a location service on the PC5 interface.

It should be noted that quantities and types of network devices and terminal devices included in the network architectures shown in FIG. 1 to FIG. 4 are merely examples. Embodiments of this application are not limited thereto. For example, there may be more or fewer terminal devices that communicate with a network device. For example, there may be more or fewer core network devices that communicate with a network device. For brevity of description, details are not described in the accompanying drawings. In addition, although the network device, the terminal device, and the core network device are shown in the network architectures shown in FIG. 1 to FIG. 4, the application scenario may include but is not limited to the network device, the terminal device, and the core network device, for example, may further include a device configured to carry a virtualized network function, a wireless relay device, a wireless backhaul device, and the like. These are obvious to persons skilled in the art. Details are not described herein.

This application provides a reference signal resource configuration method. The following separately describes the method by using the following embodiments. It should be understood that these reference signal resource configuration methods may be used in combination.

It should be understood that downlink transmission may change with evolution of the technical solutions, and the technical solutions provided in this application are not limited to the processes described below. Further, descriptions of scenarios in embodiments of this application are merely examples, and the solutions in embodiments of this application are not limited to being applicable to only the described scenarios, and are also applicable to a scenario with a similar problem.

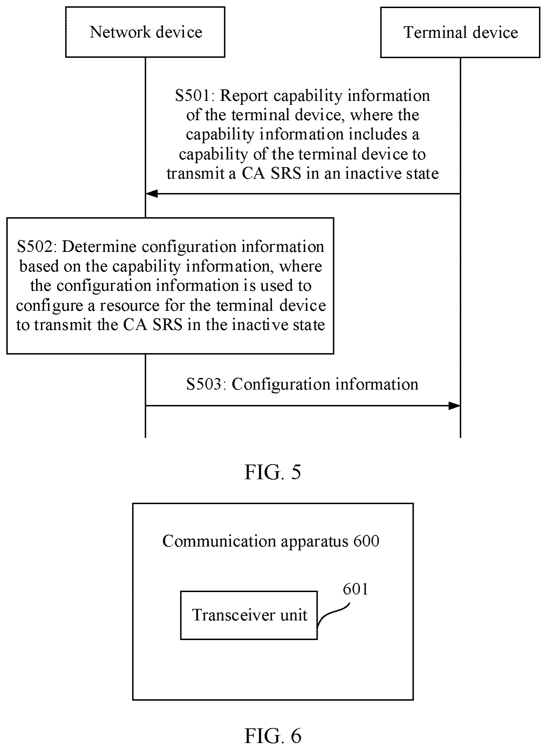

In embodiments of this application (for example, the following embodiment corresponding to FIG. 5), the method may be illustrated by using an example in which a terminal device and a network device execute the interaction example. However, the execution bodies of the interaction example are not limited in this application. For example, the terminal device may alternatively be an apparatus (for example, a chip, a chip system, or a circuit) in a terminal device, or may be a logical module or software that can implement all or some functions of a terminal device; and the network device may alternatively be an apparatus (for example, a chip, a chip system, or a circuit) in a network device, or may be a logical module or software that can implement all or some functions of a network device. In embodiments of this application, uniform descriptions are provided herein, and details are not described below again.

With reference to the foregoing network architecture, the following describes a reference signal resource configuration method provided in an embodiment of this application. FIG. 5 is an interaction diagram of a reference signal resource configuration method according to an embodiment of this application. As shown in FIG. 5, the reference signal resource configuration method may include S501 to S503.

S501: A terminal device reports capability information of the terminal device to a network device, where the capability information includes a capability of the terminal device to transmit a CA SRS in an inactive state. Correspondingly, the network device receives the capability information reported by the terminal device.

The capability information includes information about a frequency band combination supported by the terminal device in the inactive state, information about a maximum aggregated bandwidth, and information about a quantity of contiguous carriers.

In a possible implementation, the information about the frequency band combination is carried in first indication information and/or second indication information. For example, the information about the frequency band combination is carried in the first indication information; the information about the frequency band combination is carried in the second indication information; or the information about the frequency band combination may be carried in the first indication information and the second indication information, for example, the complete information about the frequency band combination may be configured in the first indication information, and the complete information about the frequency band combination is also configured in the second indication information. The first indication information corresponds to one or more frequency bands. The second indication information corresponds to one or more frequency band combinations, and the frequency band combination includes one or more frequency bands.

The network device may configure the information about the frequency band combination by adding signaling of the first indication information. For example, the information about the frequency band combination may be configured by adding BandParameters-Inactive-r18 signaling to RF-Parameters signaling of the first indication information. The network device may further configure the information about the frequency band combination by adding signaling of the second indication information. For example, the information about the frequency band combination may be configured by adding one or more pieces of BandNR signaling to RF-Parameters signaling of the second indication information. Each piece of BandNR signaling corresponds to a configuration of information about one piece of frequency band in the frequency band combination.

In a possible implementation, the information about the maximum aggregated bandwidth of the frequency band and the information about the quantity of contiguous carriers of the frequency band may be carried in third indication information. The third indication information may be carried in the first indication information. For example, the information about the maximum aggregated bandwidth of the frequency band and the information about the quantity of contiguous carriers of the frequency band may be configured by newly adding ca-BandwidthClassSRS-NR signaling to BandParameters-Inactive-r18 signaling. Alternatively, the third indication information is carried in the second indication information. For example, the information about the maximum aggregated bandwidth of the frequency band and the information about the quantity of contiguous carriers of the frequency band may be configured by newly adding ca-BandwidthClassSRS-NR signaling to BandNR signaling. Alternatively, the third indication information, the first indication information, and the second indication information belong to a same level, and are three parallel parameters in one piece of signaling.

In a possible implementation, the capability information further includes a capability of the terminal device to transmit the CA SRS in a connected state, and configuration information is further used to configure a resource for the terminal device to transmit the CA SRS in the connected state.

The terminal device may simultaneously report two capabilities to the network device: the capability of the terminal device to transmit the CA SRS in the connected state and the capability of the terminal device to transmit the CA SRS in the inactive state, to configure the CA SRS in the connected state and the CA SRS in the inactive state.

The terminal device may simultaneously report two capabilities to the network device: the capability of the terminal device to transmit the CA SRS in the connected state and the capability of the terminal device to transmit the CA SRS in the inactive state, to configure the CA SRS in the connected state and the CA SRS in the inactive state.

S502: The network device determines configuration information based on the capability information, where the configuration information is used to configure a resource for the terminal device to transmit the CA SRS in the inactive state.

In this embodiment, the CA SRS is used for positioning.

After receiving the capability information sent by the terminal device, the network device may add, to an RRC release message, the configuration information of the resource for the terminal device to transmit the CA SRS in the inactive state, and deliver the configuration information to the terminal device through the RRC release message.

Embodiment 1: The configuration information includes first configuration information and second configuration information, the first configuration information is used to configure a carrier that carries the CA SRS, the second configuration information is used to configure a resource for the CA SRS, and the resource for the CA SRS one-to-one corresponds to the carrier that carries the CA SRS.

It may be understood that the carrier that carries the CA SRS may be a CA CC.

It may be understood that there may be at least two carriers that carry the CA SRS, and resources that are used for the CA SRS and that correspond to the at least two carriers are different. In other words, each carrier that carries the CA SRS directly corresponds to a different resource (the resource is the resource for the CA SRS).

Optionally, the network device may add Inactive-SRS-CA-config to SuspendConfig of the RRC release message, and the configuration information is configured in the Inactive-SRS-CA-config signaling.

Optionally, the second configuration information is carried in the first configuration information, the first configuration information may be configuration information of a carrier (for example, the carrier that carries the CA SRS), and the second configuration information is a configuration of the resource for the CA SRS. Because the second configuration information is carried in the first configuration information, when the terminal device obtains the first configuration information, the terminal device may directly obtain the second configuration information associated with the first configuration information, and determine that the resource for the CA SRS corresponds to the carrier that carries the CA SRS.

For example, the configuration information may be configured in the Inactive-SRS-CA-config signaling. In this case, ComponentCarrierConfig signaling may be added to the Inactive-SRS-CA-config signaling. The first configuration information is configured through the ComponentCarrierConfig signaling. The resource for the CA SRS may be configured by adding srs-PosConfig-Inactive signaling to the ComponentCarrierConfig signaling.

Optionally, the first configuration information and the second configuration information are carried in parallel in the configuration information. In other words, the first configuration information and the second configuration information belong to a same level. For example, when the configuration information is configured through the Inactive-SRS-CA-config signaling, the first configuration information is configured through the ComponentCarrierConfig signaling, and the second configuration information is configured through the srs-PosConfig-Inactive signaling. The Inactive-SRS-CA-config signaling includes the ComponentCarrierConfig signaling and the srs-PosConfig-Inactive signaling that are parallel.

Optionally, the network device may separately send the first configuration information and the second configuration information to the terminal device.

In an implementation, the first configuration information is used to configure the carrier that carries the CA SRS, there are at least two carriers that carry the CA SRS, and each carrier that carries the CA SRS corresponds to one piece of first configuration information. For example, the network device defines a set of first configuration information, the set of first configuration information includes a plurality of pieces of first configuration information, and each piece of first configuration information corresponds to one carrier.

Optionally, the first configuration information may be used to directly configure at least two carriers that carry the CA SRS. In other words, there is one piece of first configuration information, and the first configuration information may be used to configure two carriers that carry the CA SRS.

Optionally, the carrier that carries the CA SRS may include at least two uplink carriers, and the at least two carriers that carry the CA SRS belong to a same frequency band.

Optionally, the at least two uplink carriers that are in the frequency band and that carry the CA SRS may be contiguous in frequency domain, to implement intra-band contiguous CA.

It may be understood that the at least two uplink carriers that are in the same frequency band and that carry the CA SRS may be non-contiguous in frequency domain, to implement intra-band non-contiguous CA.

In this implementation, the at least two uplink carriers are used for the CA SRS for positioning, that is, the at least two uplink carriers are carriers that carry the CA SRS for positioning.

In an implementation, the first configuration information may be further used to configure at least two uplink carriers, at least one uplink carrier in the at least two uplink carriers is used for data transmission, and the at least one uplink carrier is an uplink carrier of a cell on which the terminal device camps.

Optionally, the at least two uplink carriers belong to a same frequency band.

Optionally, the at least two uplink carriers in the same frequency band may be contiguous in frequency domain.

It may be understood that the at least two uplink carriers in the same frequency band may be non-contiguous in frequency domain.

In this implementation, the at least two uplink carriers may be positioning-dedicated uplink carriers. For example, the positioning-dedicated uplink carrier may carry the CA SRS for positioning, or may carry positioning data, that is, may be used to transmit positioning-related data.

Optionally, at least one uplink carrier in the at least two uplink carriers is the CA SRS for positioning, and at least one uplink carrier in the at least two uplink carriers is used for data transmission.

For example, the at least two uplink carriers may include one or more CA SRSs for positioning. In addition to the uplink carrier of the CA SRS for positioning, the at least two uplink carriers further include one or more uplink carriers for data transmission. It is assumed that there are two uplink carriers, one uplink carrier is used for the CA SRS for positioning, and the other uplink carrier is used for data transmission. Alternatively, it is assumed that there are three uplink carriers, one of the uplink carriers may be used for the CA SRS for positioning, and one of the remaining two uplink carriers may be used for data transmission, or both the remaining two uplink carriers are used for data transmission.

In a possible implementation, the first configuration information is further used to configure at least two uplink carriers, and both the at least two uplink carriers are used for a PRACH. In other words, none of the at least two uplink carriers is used for data transmission.

Similarly, the at least two uplink carriers may be contiguous or non-contiguous in frequency domain.

In a possible implementation, the first configuration information is further used to configure at least two uplink carriers, at least one uplink carrier in the at least two uplink carriers is used for the CA SRS for positioning, and at least one uplink carrier in the at least two uplink carriers is used for a PRACH.

It is assumed that there are two uplink carriers in a frequency band, transmission of one uplink carrier is used for the CA SRS for positioning, and the other uplink carrier is used for the PRACH. Alternatively, it is assumed that there are three uplink carriers in a frequency band, one of the uplink carriers is used for the CA SRS for positioning, and one of the remaining two uplink carriers may be used for the PRACH.

Similarly, the at least two uplink carriers may be contiguous or non-contiguous in frequency domain.

The first configuration information includes one or more of the following: frequency channel number information, a bandwidth, an SCS, and a BWP.

In this embodiment, the first configuration information includes frequency channel number information of a carrier.

The frequency channel number information is an absolute radio frequency channel number (Absolute radio frequency channel number, ARFCN). The ARFCN may be an ARFCN corresponding to a point A, an ARFCN corresponding to a minimum frequency spacing (Channel Raster, CR) of the carrier, or an AFCN number corresponding to an SSB of the carrier. The AFCN number corresponding to the SSB of the carrier is an ARFCN number of a 0^{th} subcarrier of a 10^{th} resource block (resource block, RB) starting from 0 in the corresponding SSB.

When the frequency channel number information is frequency channel number information of an NUL, the first configuration information may be used to configure an NUL carrier that carries the CA SRS. When a frequency channel number of a carrier in the first configuration information is an NUL, CA is performed on the carrier and another NUL carrier. When the frequency channel number information is frequency channel number information of an SUL, the first configuration information may be used to configure an SUL carrier that carries the CA SRS. When a frequency channel number of a carrier in the first configuration information is an SUL, CA is performed on the carrier and another SUL carrier.

In this embodiment, the bandwidth, the SCS, and the BWP are optional. For example, when the first configuration information includes the BWP of the carrier, the bandwidth of the carrier and the SCS of the carrier may not be configured in the first configuration information, and a start location of the resource for the CA SRS may be determined based on a start RB location of the BWP. For another example, when the first configuration information includes the bandwidth of the carrier and the SCS of the carrier, the BWP of the carrier may not be configured in the first configuration information, and a start location of the resource for the CA SRS may be determined based on a start RB location of the carrier.

In a possible implementation, the configuration information further includes a first parameter, and the first parameter indicates available time of a TA of a carrier. For example, the first parameter may be a TimeAlignmentTimer parameter, and the carrier is the carrier that carries the CA SRS. There are at least two pieces of first configuration information, each carrier that carries the CA SRS has the first configuration information, and the first parameter corresponds to the at least two carriers that carry the CA SRS. In other words, the first parameter is a common parameter of the at least two carriers, and there is one first parameter.

The first parameter is configured independently of the first configuration information, that is, the first parameter does not need to be configured in the first configuration information, thereby reducing overheads and complexity of a signaling procedure corresponding to the first configuration information.

Optionally, there are at least two first parameters, and a quantity of first parameters is equal to a quantity of carriers that carry the CA SRS. Each first parameter corresponds to one carrier that carries the CA SRS. Different carriers that carry the CA SRS may correspond to different first parameters, or may correspond to a same first parameter.

When there are at least two first parameters, the at least two first parameters belong to a same TAG, so that configuration of different carriers is simplified.

In a possible implementation, the configuration information further includes a second parameter, the second parameter is used to determine whether to send the CA SRS, and the second parameter corresponds to at least two carriers that carry the CA SRS.

It may be understood that the at least two carriers that carry the CA SRS may be correspondingly associated with one second parameter. That is, there are at least two carriers that carry the CA SRS, there is one second parameter, and one second parameter corresponds to a plurality of carriers that carry the CA SRS. The second parameter is configured independently of the first configuration information, that is, the second parameter does not need to be configured in the first configuration information, thereby reducing overheads and complexity of a signaling procedure corresponding to the first configuration information.

Optionally, there may be at least two second parameters, each second parameter corresponds to one carrier that carries the CA SRS, and the at least two second parameters may form a set. The set may be independently configured relative to the first configuration information, to reduce overheads and complexity of a signaling procedure corresponding to the first configuration information.

The second parameter may be associated with a reference signal, and a type of the reference signal includes one or more of the following: an SSB, a TRS, an SCI-RS, and an NCD-SSB. The reference signal may be, for example, one of the SSB, the TRS, the SCI-RS, and the NCD-SSB; the reference signal may be the TRS and the SCI-RS; the reference signal may be the TRS and the NCD-SSB; the reference signal may be the TRS and the NCD-SSB; or the reference signal may be the TRS, the SCI-RS, and the NCD-SSB.

Optionally, the second parameter may be correspondingly associated with one of the plurality of reference signal types.

In a possible implementation, the CA SRS is associated with one or more of the plurality of reference signals, and a sending parameter of the CA SRS is determined based on the reference signal associated with the CA SRS. The sending parameter includes one or more of the following: whether the CA SRS is sent (including sending the CA SRS and not sending the CA SRS), transmit power of the CA SRS, and a sending timing of the CA SRS.

For example, if the CA SRS is associated with the TRS, the sending parameter of the CA SRS is determined based on the TRS.

The second parameter may be a threshold. For example, the second parameter is RSRP-changeThreshold. If the sending parameter includes whether the CA SRS is sent, the CA SRS is associated with the SSB, and the second parameter is associated with the SSB, the terminal device may compare measured energy/RSRP of the SSB with the second parameter. If the measured energy/RSRP of the SSB is less than the second parameter, the terminal device may determine that the sending parameter is specifically that the CA SRS is not sent; or if the measured energy RSRP of the SSB is greater than or equal to the second parameter, the terminal device may determine that the sending parameter is specifically that the CA SRS is sent.

In a possible implementation, the configuration information further includes third configuration information and fourth configuration information, the third configuration information is used to configure an SCell that carries the CA SRS, and the third configuration information includes BWP information. The fourth configuration information is used to configure the resource for the CA SRS, and the resource for the CA SRS corresponds to the SCell.

For example, the SCell that carries the CA SRS may be configured by configuring UplinkConfig signaling in signaling corresponding to the configuration information.

Embodiment 2: The configuration information includes first configuration information and second configuration information, the first configuration information may be further used to configure a carrier frequency for carrying a CA/bandwidth aggregation SRS, the second configuration information is used to configure a resource for the CA SRS, and the resource for the CA SRS one-to-one corresponds to the carrier frequency for carrying the CA SRS.

A difference between Embodiment 2 and Embodiment 1 lies in that the first configuration information in Embodiment 2 is used to configure the carrier frequency for carrying the CA SRS, and the first configuration information in Embodiment 1 is used to configure the carrier that carries the C. The limitation on the carrier in Embodiment 1 may be used as a limitation on the carrier frequency in Embodiment 2. For beneficial effect achieved by the carrier frequency in Embodiment 2, refer to descriptions of the carrier in Embodiment 1. To avoid repetition, details are appropriately omitted herein.

S503: The network device sends the configuration information to the terminal device. Correspondingly, the terminal device receives the configuration information sent by the network device.

After configuring the configuration information, the network device may deliver the configuration information to the terminal device through the RRC release message, and the terminal device receives the configuration information.

When the terminal device is in the inactive state, after the terminal device receives the configuration information, the method may further include: The terminal device sends the CA SRS to the network device on the carrier based on the configuration information. Correspondingly, the network device receives, on the carrier that carries the CA SRS based on the configuration information, the CA SRS sent by the terminal device.

The terminal device may determine, based on the first configuration information in the configuration information, the carrier that carries the CA SRS, and then send, based on the second configuration information, the CA SRS to the network device on the carrier that carries the CA SRS.

When the terminal device is in the connected state, after the terminal device receives the configuration information, the method may further include: The terminal device sends the CA SRS to the network device in the SCell based on the configuration information. Correspondingly, the network device receives, in the SCell based on the configuration information, the CA SRS sent by the terminal device.

The terminal device may determine, based on the third configuration information in the configuration information, the SCell that carries the CA SRS, and then send the CA SRS to the network device in the SCell based on the fourth configuration information.

In the solution provided in this application, different from a case in which the terminal device cannot configure the resource for the terminal device to transmit the CA SRS in the inactive state, in this embodiment of this application, the terminal device may configure, based on the configuration information sent by the network device, the resource for the terminal device to transmit the CA SRS in the inactive state. The configuration information is configuration information that is of the resource for the terminal device to transmit the CA SRS in the inactive state and that is newly added by the network device.

The foregoing describes the method embodiments provided in embodiments of this application. The following describes apparatus embodiments in embodiments of this application.

FIG. 6 is a diagram of a structure of a communication apparatus according to an embodiment of this application. The communication apparatus may be a terminal device, or may be an apparatus (for example, a chip, a chip system, or a circuit) in a terminal device. As shown in FIG. 6, a communication apparatus 600 includes at least a transceiver unit 601.

The transceiver unit 601 is configured to report capability information of a terminal device to a network device, where the capability information includes a capability of the terminal device to transmit a CA SRS in an inactive state.

The transceiver unit 601 is configured to receive configuration information sent by the network device, where the configuration information is used to configure a resource for the terminal device to transmit the CA SRS in the inactive state, and the configuration information is determined based on the capability information.

In an implementation, the CA SRS is used for positioning.

In an implementation, the configuration information is carried in an RRC release message.

In an implementation, the configuration information includes first configuration information and second configuration information, the first configuration information is used to configure a carrier frequency for carrying the CA SRS, the second configuration information is used to configure the resource for the CA SRS, and the resource for the CA SRS corresponds to the carrier frequency for carrying the CA SRS. The method further includes: transmitting, based on the configuration information, the CA SRS at the carrier frequency for carrying the CA SRS.

In an implementation, there are at least two carrier frequencies for carrying the CA SRS, and different carrier frequencies for carrying the CA SRS correspond to different resources for the CA SRS.

In an implementation, the carrier frequency for carrying the CA SRS includes at least two uplink carrier frequencies, and the at least two uplink carrier frequencies belong to a same frequency band.

In an implementation, the at least two uplink carrier frequencies in the same frequency band are contiguous in frequency domain.

In an implementation, the at least two uplink carrier frequencies are used for the CA SRS for positioning.

In an implementation, the first configuration information is further used to configure at least two uplink carrier frequencies, at least one uplink carrier frequency in the at least two uplink carrier frequencies is a frequency corresponding to an uplink carrier of a cell on which the terminal device camps, and the at least one uplink carrier frequency is used for data transmission.

In an implementation, the first configuration information is further used to configure at least two uplink carrier frequencies, and the at least two uplink carrier frequencies are frequencies corresponding to positioning-dedicated uplink carriers.

In an implementation, the first configuration information is further used to configure at least two uplink carrier frequencies, and the at least two uplink carrier frequencies are used for a physical random access channel (physical random access channel, PRACH).

In an implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for a PRACH.

In an implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for data transmission.

In an implementation, the configuration information includes first configuration information and second configuration information, the first configuration information is used to configure a carrier that carries the CA SRS, the second configuration information is used to configure the resource for the CA SRS, and the resource for the CA SRS corresponds to the carrier that carries the CA SRS. The transceiver unit 601 is further configured to transmit, based on the configuration information, the CA SRS on the carrier that carries the CA SRS.

In an implementation, there are at least two carriers that carry the CA SRS, and different carriers that carry the CA SRS correspond to different resources for the CA SRS.

In an implementation, the second configuration information is carried in the first configuration information.

In an implementation, the first configuration information and the second configuration information are carried in parallel in the configuration information.

In an implementation, the carrier that carries the CA SRS includes at least two uplink carriers, and the at least two uplink carriers belong to a same frequency band.

In an implementation, the at least two uplink carriers in the same frequency band are contiguous in frequency domain.

In an implementation, the at least two uplink carriers are used for the CA SRS for positioning.

In an implementation, the first configuration information is further used to configure at least two uplink carriers, at least one uplink carrier in the at least two uplink carriers is an uplink carrier of a cell on which the terminal device camps, and the at least one uplink carrier is used for data transmission.

In an implementation, the first configuration information is further used to configure at least two uplink carriers, and transmission of the at least two uplink carriers is positioning-dedicated uplink carriers.

In an implementation, the first configuration information is further used to configure at least two uplink carriers, and the at least two uplink carriers are used for a PRACH.

In an implementation, the first configuration information is further used to configure at least two uplink carriers, at least one uplink carrier in the at least two uplink carriers is used for the CA SRS for positioning, and at least one uplink carrier in the at least two uplink carriers is used for a PRACH.

In an implementation, the first configuration information is further used to configure at least two uplink carriers, at least one uplink carrier in the at least two uplink carriers is used for the CA SRS for positioning, and at least one uplink carrier in the at least two uplink carriers is used for data transmission.

In an implementation, the first configuration information includes one or more of the following: frequency channel number information, a bandwidth, an SCS, and BWP information.

In an implementation, when the frequency channel number information is frequency channel number information of an NUL, the first configuration information is used to configure an NUL carrier that carries the CA SRS, or the first configuration information is used to configure a frequency corresponding to an NUL carrier that carries the CA SRS; or when the frequency channel number information is frequency channel number information of an SUL, the first configuration information is used to configure an SUL carrier that carries the CA SRS, or the first configuration information is used to configure a frequency corresponding to an SUL carrier that carries the CA SRS.

In an implementation, the configuration information further includes a first parameter, and the first parameter indicates available time of a TA of the carrier that carries the CA SRS, or the first parameter indicates available time of a TA of the carrier frequency for carrying the CA SRS.

In an implementation, there are at least two carriers that carry the CA SRS, each carrier corresponds to one piece of first configuration information, and the first parameter corresponds to the at least two carriers that carry the CA SRS.

In an implementation, there are at least two carrier frequencies for carrying the CA SRS, each carrier frequency for carrying the CA SRS corresponds to one piece of first configuration information, and the first parameter corresponds to the at least two carrier frequencies for carrying the CA SRS.

In an implementation, there are at least two first parameters, and each first parameter corresponds to one carrier that carries the CA SRS. Alternatively, there are at least two first parameters, and each first parameter corresponds to one carrier frequency for carrying the CA SRS.

In an implementation, the at least two first parameters belong to a same TAG.

In an implementation, there are at least two carriers that carry the CA SRS, the configuration information further includes a second parameter, the second parameter is used to determine whether to send the CA SRS, and the second parameter corresponds to the at least two carriers that carry the CA SRS.

In an implementation, there are at least two carrier frequencies for carrying the CA SRS, the configuration information further includes a second parameter, the second parameter is used to determine whether to send the CA SRS, and the second parameter corresponds to the at least two carrier frequencies for carrying the CA SRS.

In an implementation, the second parameter is associated with a reference signal, and a type of the reference signal includes one or more of the following: an SSB, a TRS, a CSI-RS, and an NCD-SSB.

In an implementation, the CA SRS is associated with one or more of the following reference signals: the SSB, the TRS, the CSI-RS, and the NCD-SSB, and a sending parameter of the CA SRS is determined based on the reference signal associated with the CA SRS.

In an implementation, the sending parameter includes one or more of the following: whether the CA SRS is sent, transmit power of the CA SRS, and a sending timing of the CA SRS.

In an implementation, the capability information includes information about a frequency band combination supported by the terminal device, the information about the frequency band combination is carried in first indication information and/or second indication information, the first indication information corresponds to one or more frequency bands, the second indication information corresponds to one or more frequency band combinations, and the frequency band combination includes one or more frequency bands.

In an implementation, the capability information further includes information about a maximum aggregated bandwidth of a frequency band and information about a quantity of contiguous carriers of the frequency band, and both the information about the maximum aggregated bandwidth of the frequency band and the information about the quantity of contiguous carriers of the frequency band are carried in third indication information.

In an implementation, the third indication information is carried in the first indication information; or the third indication information is carried in the second indication information.

In an implementation, the capability information further includes a capability of the terminal device to transmit the CA SRS in a connected state, and the configuration information is further used to configure a resource for the terminal device to transmit the CA SRS in the connected state.

In an implementation, the configuration information further includes third configuration information and fourth configuration information, the third configuration information is used to configure an SCell that carries the CA SRS, the third configuration information includes the BWP information, the fourth configuration information is used to configure the resource for the CA SRS, and the resource for the CA SRS corresponds to the secondary cell. The method further includes: transmitting the CA SRS in the SCell based on the configuration information.

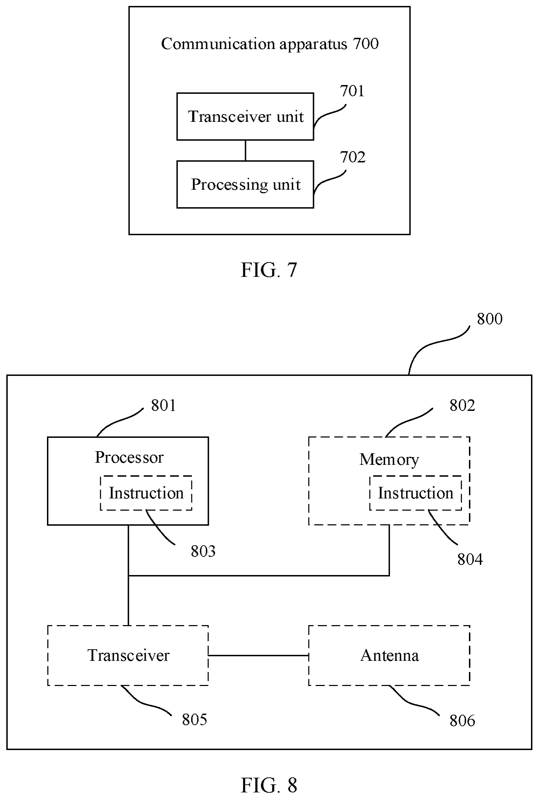

FIG. 7 is a diagram of a structure of another communication apparatus according to an embodiment of this application. The communication apparatus may be a network device, or may be an apparatus (for example, a chip, a chip system, or a circuit) in a network device. As shown in FIG. 7, a communication apparatus 700 includes at least a transceiver unit 701 and a processing unit 702.

The transceiver unit 701 is configured to receive capability information reported by a terminal device, where the capability information includes a capability of the terminal device to transmit a CA SRS in an inactive state.

The transceiver unit 701 is further configured to send configuration information to the terminal device, where the configuration information is used to configure a resource for the terminal device to transmit the CA SRS in the inactive state. The communication apparatus 700 further includes the processing unit 702. The processing unit 702 is configured to determine the configuration information based on the capability information.

In an implementation, the CA SRS is used for positioning.

In an implementation, the configuration information is carried in an RRC release message.

In an implementation, the configuration information includes first configuration information and second configuration information, the first configuration information is used to configure a carrier frequency for carrying the CA SRS, the second configuration information is used to configure the resource for the CA SRS, and the resource for the CA SRS corresponds to the carrier frequency for carrying the CA SRS. The method further includes: transmitting, based on the configuration information, the CA SRS at the carrier frequency for carrying the CA SRS.

In an implementation, there are at least two carrier frequencies for carrying the CA SRS, and different carrier frequencies for carrying the CA SRS correspond to different resources for the CA SRS.

In an implementation, the carrier frequency for carrying the CA SRS includes at least two uplink carrier frequencies, and the at least two uplink carrier frequencies belong to a same frequency band.

In an implementation, the at least two uplink carrier frequencies in the same frequency band are contiguous in frequency domain.

In an implementation, the at least two uplink carrier frequencies are used for the CA SRS for positioning.

In an implementation, the first configuration information is further used to configure at least two uplink carrier frequencies, at least one uplink carrier frequency in the at least two uplink carrier frequencies is a frequency corresponding to an uplink carrier of a cell on which the terminal device camps, and the at least one uplink carrier frequency is used for data transmission.

In an implementation, the first configuration information is further used to configure at least two uplink carrier frequencies, and the at least two uplink carrier frequencies are frequencies corresponding to positioning-dedicated uplink carriers.

In an implementation, the first configuration information is further used to configure at least two uplink carrier frequencies, and the at least two uplink carrier frequencies are used for a physical random access channel (physical random access channel, PRACH).

In an implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for a PRACH.

In an implementation, the first configuration information is further used to configure at least two uplink carrier frequencies, at least one uplink carrier frequency in the at least two uplink carrier frequencies is used for the CA SRS for positioning, and at least one uplink carrier frequency in the at least two uplink carrier frequencies is used for data transmission.

In an implementation, the configuration information includes first configuration information and second configuration information, the first configuration information is used to configure a carrier that carries the CA SRS, the second configuration information is used to configure the resource for the CA SRS, and the resource for the CA SRS corresponds to the carrier that carries the CA SRS. The transceiver unit 601 is further configured to transmit, based on the configuration information, the CA SRS on the carrier that carries the CA SRS.

In an implementation, there are at least two carriers that carry the CA SRS, and different carriers that carry the CA SRS correspond to different resources for the CA SRS.

In an implementation, the second configuration information is carried in the first configuration information.

In an implementation, the first configuration information and the second configuration information are carried in parallel in the configuration information.

In an implementation, the carrier that carries the CA SRS includes at least two uplink carriers, and the at least two uplink carriers belong to a same frequency band.

In an implementation, the at least two uplink carriers in the same frequency band are contiguous in frequency domain.

In an implementation, the at least two uplink carriers are used for the CA SRS for positioning.

In an implementation, the first configuration information is further used to configure at least two uplink carriers, at least one uplink carrier in the at least two uplink carriers is an uplink carrier of a cell on which the terminal device camps, and the at least one uplink carrier is used for data transmission.

In an implementation, the first configuration information is further used to configure at least two uplink carriers, and transmission of the at least two uplink carriers is positioning-dedicated uplink carriers.

In an implementation, the first configuration information is further used to configure at least two uplink carriers, and the at least two uplink carriers are used for a PRACH.

In an implementation, the first configuration information is further used to configure at least two uplink carriers, at least one uplink carrier in the at least two uplink carriers is used for the CA SRS for positioning, and at least one uplink carrier in the at least two uplink carriers is used for a PRACH.

In an implementation, the first configuration information is further used to configure at least two uplink carriers, at least one uplink carrier in the at least two uplink carriers is used for the CA SRS for positioning, and at least one uplink carrier in the at least two uplink carriers is used for data transmission.

In an implementation, the first configuration information includes one or more of the following: frequency channel number information, a bandwidth, an SCS, and BWP information.

In an implementation, when the frequency channel number information is frequency channel number information of an NUL, the first configuration information is used to configure an NUL carrier that carries the CA SRS, or the first configuration information is used to configure a frequency corresponding to an NUL carrier that carries the CA SRS; or when the frequency channel number information is frequency channel number information of an SUL, the first configuration information is used to configure an SUL carrier that carries the CA SRS, or the first configuration information is used to configure a frequency corresponding to an SUL carrier that carries the CA SRS.

In an implementation, the configuration information further includes a first parameter, and the first parameter indicates available time of a TA of the carrier that carries the CA SRS, or the first parameter indicates available time of a TA of the carrier frequency for carrying the CA SRS.

In an implementation, there are at least two carriers that carry the CA SRS, each carrier corresponds to one piece of first configuration information, and the first parameter corresponds to the at least two carriers that carry the CA SRS.

In an implementation, there are at least two carrier frequencies for carrying the CA SRS, each carrier frequency for carrying the CA SRS corresponds to one piece of first configuration information, and the first parameter corresponds to the at least two carrier frequencies for carrying the CA SRS.

In an implementation, there are at least two first parameters, and each first parameter corresponds to one carrier that carries the CA SRS. Alternatively, there are at least two first parameters, and each first parameter corresponds to one carrier frequency for carrying the CA SRS.

In an implementation, the at least two first parameters belong to a same TAG.

In an implementation, there are at least two carriers that carry the CA SRS, the configuration information further includes a second parameter, the second parameter is used to determine whether to send the CA SRS, and the second parameter corresponds to the at least two carriers that carry the CA SRS.

In an implementation, there are at least two carrier frequencies for carrying the CA SRS, the configuration information further includes a second parameter, the second parameter is used to determine whether to send the CA SRS, and the second parameter corresponds to the at least two carrier frequencies for carrying the CA SRS.

In an implementation, the second parameter is associated with a reference signal, and a type of the reference signal includes one or more of the following: an SSB, a TRS, a CSI-RS, and an NCD-SSB.

In an implementation, the CA SRS is associated with one or more of the following reference signals: the SSB, the TRS, the CSI-RS, and the NCD-SSB, and a sending parameter of the CA SRS is determined based on the reference signal associated with the CA SRS.

In an implementation, the sending parameter includes one or more of the following: whether the CA SRS is sent, transmit power of the CA SRS, and a sending timing of the CA SRS.

In an implementation, the capability information includes information about a frequency band combination supported by the terminal device, the information about the frequency band combination is carried in first indication information and/or second indication information, the first indication information corresponds to one or more frequency bands, the second indication information corresponds to one or more frequency band combinations, and the frequency band combination includes one or more frequency bands.

In an implementation, the capability information further includes information about a maximum aggregated bandwidth of a frequency band and information about a quantity of contiguous carriers of the frequency band, and both the information about the maximum aggregated bandwidth of the frequency band and the information about the quantity of contiguous carriers of the frequency band are carried in third indication information.

In an implementation, the third indication information is carried in the first indication information; or the third indication information is carried in the second indication information.

In an implementation, the capability information further includes a capability of the terminal device to transmit the CA SRS in a connected state, and the configuration information is further used to configure a resource for the terminal device to transmit the CA SRS in the connected state.

In an implementation, the configuration information further includes third configuration information and fourth configuration information, the third configuration information is used to configure an SCell that carries the CA SRS, the third configuration information includes the BWP information, the fourth configuration information is used to configure the resource for the CA SRS, and the resource for the CA SRS corresponds to the secondary cell. The method further includes: transmitting the CA SRS in the SCell based on the configuration information.

Based on the foregoing network architecture, FIG. 8 is a diagram of a structure of still another communication apparatus according to an embodiment of this application. As shown in FIG. 8, an apparatus 800 may include one or more processors 801. The processor 801 may also be referred to as a processing unit, and may implement a specific control function. The processor 801 may be a general-purpose processor, a dedicated processor, or the like, for example, may be a baseband processor or a central processing unit. The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program.

In an optional design, the processor 801 may alternatively store instructions 803 and/or data, and the instructions 803 and/or the data may be run by the processor, to enable the apparatus 800 to perform the method described in the foregoing method embodiments.

In another optional design, the processor 801 may include a transceiver unit configured to implement receiving and sending functions. For example, the transceiver unit may be a transceiver circuit, an interface, an interface circuit, or a communication interface. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, the apparatus 800 may include a circuit. The circuit may implement a sending, receiving, or communication function in the foregoing method embodiments.

Optionally, the apparatus 800 may include one or more memories 802. The memory 802 may store the instructions 804 and/or the data. The instructions 804 and/or the data may be run on the processor, so that the apparatus 800 is caused to perform the method described in the foregoing method embodiments. Optionally, the memory may further store the data. Optionally, the processor may also store instructions and/or data. The processor and the memory may be separately disposed, or may be integrated together. For example, a correspondence described in the foregoing method embodiments may be stored in the memory or the processor.

Optionally, the apparatus 800 may further include a transceiver 805 and/or an antenna 806. The processor 801 may be referred to as a processing unit, and controls the apparatus 800. The transceiver 805 may be referred to as a transceiver unit, a transceiver device, a transceiver circuit, a transceiver apparatus, a transceiver module, or the like, and is configured to implement sending and receiving functions.

Optionally, the apparatus 800 in this embodiment of this application may be configured to perform the method described in FIG. 5 in embodiments of this application.

In an implementation, the communication apparatus 800 may be a terminal device, or may be an apparatus (for example, a chip, a chip system, or a circuit) in a terminal device. The transceiver 805 is configured to perform operations performed by the transceiver unit 601 in the foregoing embodiments, and the transceiver 805 is further configured to send information to a communication apparatus other than the communication apparatus. The terminal device or the apparatus in the terminal device may be further configured to perform various methods performed by the terminal device in the method embodiment in FIG. 5. Details are not described again.

In an implementation, the communication apparatus 800 may be a network device, or may be an apparatus (for example, a chip, a chip system, or a circuit) in a network device. When computer program instructions stored in the memory 802 are executed, the processor 801 is configured to perform operations performed by the processing unit 702 in the foregoing embodiments, the transceiver 805 is configured to perform operations performed by the transceiver unit 701 in the foregoing embodiments, and the transceiver 805 is further configured to receive information from a communication apparatus other than the communication apparatus. The network device or the apparatus in the network device may be further configured to perform various methods performed by the network device in the method embodiment in FIG. 5. Details are not described again.

The processor and the transceiver that are described in this application may be implemented on an integrated circuit (integrated circuit, IC), an analog IC, a radio frequency integrated circuit (radio frequency interface chip, RFIC), a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an n-type metal-oxide-semiconductor (nMetal-oxide-semiconductor, NMOS), a p-type metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The apparatus described in the foregoing embodiment may be a first communication device or a second communication device. However, a range of the apparatus described in this application is not limited thereto, and a structure of the apparatus may not be limited to FIG. 8. The apparatus may be an independent device, or may be a part of a larger device. For example, the apparatus may be:
(1) an independent integrated circuit IC, a chip, or a chip system or subsystem;
(2) a set of one or more ICs, where optionally, the IC set may also include a storage component configured to store data and/or instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, a machine device, a home device, a medical device, an industrial device, or the like; or
(6) others.

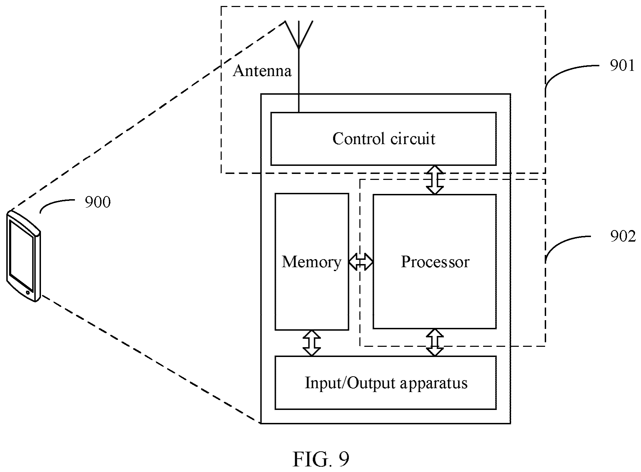

FIG. 9 is a diagram of a structure of a terminal device according to an embodiment of this application. For ease of description, FIG. 9 shows only main components of the terminal device. As shown in FIG. 9, a terminal device 900 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. A radio frequency circuit is mainly configured to: perform conversion between a baseband signal and a radio frequency signal, and process the radio frequency signal. The antenna is mainly configured to receive/send a radio frequency signal in a form of an electromagnetic wave. The input/output apparatus, such as a touchscreen, a display, or a keyboard, is mainly configured to: receive data input by a user, and output data to the user.

After the terminal is powered on, the processor may read the software program in the storage unit, interpret and execute instructions of the software program, and process the data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in an electromagnetic wave form through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 9 shows only one memory and one processor. In an actual terminal, there may be a plurality of processors and memories. The memory may also be referred to as a storage medium, a storage device, or the like. This is not limited in this embodiment of this application.

In an optional implementation, the processor may include a baseband processor and a central processing unit. The baseband processor is mainly configured to process a communication protocol and communication data, and the central processing unit is mainly configured to: control the entire terminal, execute a software program, and process data of the software program. The processor in FIG. 9 integrates functions of the baseband processor and the central processing unit. Persons skilled in the art may understand that the baseband processor and the central processing unit may alternatively be independent processors, and are interconnected by using a technology such as a bus. Persons skilled in the art may understand that the terminal may include a plurality of baseband processors to adapt to different network standards, and the terminal may include a plurality of central processing units to enhance a processing capability of the terminal. All the components of the terminal may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 901 of the terminal device 900, and the processor having a processing function may be considered as a processing unit 902 of the terminal device 900. As shown in FIG. 9, the terminal device 900 includes the transceiver unit 901 and the processing unit 902. The transceiver unit may also be referred to as a transceiver, a transceiver device, a transceiver apparatus, or the like. Optionally, a component for implementing a receiving function in the transceiver unit 901 may be considered as a receiving unit, and a component for implementing a sending function in the transceiver unit 901 may be considered as a sending unit. That is, the transceiver unit 901 includes the receiving unit and the sending unit. For example, the receiving unit may also be referred to as a receiver device, a receiver, or a receiving circuit, and the sending unit may also be referred to as a transmitter device, a transmitter, or a transmitting circuit. Optionally, the receiving unit and the sending unit may be one integrated unit, or may be a plurality of independent units. The receiving unit and the sending unit may be in one geographical location, or may be distributed in a plurality of geographical locations.

In an implementation, the processing unit 902 is configured to perform operations performed by the processing unit 702 in the foregoing embodiment, and the transceiver unit 901 is configured to perform operations performed by the transceiver unit 601 in the foregoing embodiment, or perform operations performed by the transceiver unit 701 in the foregoing embodiment. The terminal device 900 may be further configured to perform various methods performed by the terminal device in the method embodiment in FIG. 5. Details are not described again.

An embodiment of this application further provides a computer-readable storage medium, and the computer-readable storage medium stores a computer program. When the program is executed by a processor, a procedure related to the terminal device in the transmission mode determining method provided in the foregoing method embodiments may be implemented.

An embodiment of this application further provides a computer-readable storage medium, and the computer-readable storage medium stores a computer program. When the program is executed by a processor, a procedure related to the network device in the transmission mode determining method provided in the foregoing method embodiments may be implemented.

An embodiment of this application further provides a computer program product. When the computer program product runs on a computer or a processor, the computer or the processor is enabled to perform one or more steps in any one of the foregoing transmission mode determining methods. When each of component modules in the foregoing device is implemented in a form of a software functional unit and is sold or used as an independent product, the component modules may be stored in the computer-readable storage medium.

An embodiment of this application further provides a chip system, including at least one processor and a communication interface. The communication interface and the at least one processor are interconnected through a line, and the at least one processor is configured to run a computer program or instructions, to perform some or all of the steps recorded in any one of the method embodiments corresponding to FIG. 5. The chip system may include a chip, or may include a chip and another discrete component.

An embodiment of this application further discloses a communication system. The system includes a terminal device and a network device. For specific descriptions, refer to the transmission mode determining method shown in FIG. 5.

It should be understood that the memory mentioned in embodiments of this application may be a volatile memory or a non-volatile memory, or may include both a volatile memory and a non-volatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory is any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

It should be further understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

Persons of ordinary skill in the art may be aware that units and algorithm steps in the examples described with reference to embodiments provided in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces, and the indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The storage medium includes any medium that can store program code, for example, a USB flash drive, a removable hard disk, a ROM, a RAM, a magnetic disk, or an optical disc.

A sequence of the steps of the methods in embodiments of this application may be adjusted, combined, or removed based on an actual requirement.

The modules/units in the apparatuses in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A reference signal resource configuration method, comprising:
reporting capability information of a terminal device to a network device, wherein the capability information comprises a capability of the terminal device to transmit a carrier aggregation CA sounding reference signal SRS in an inactive state; and
receiving configuration information sent by the network device, wherein the configuration information is used to configure a resource for the terminal device to transmit the CA SRS in the inactive state, and the configuration information is determined based on the capability information.

2. A reference signal resource configuration method, comprising:
receiving capability information reported by a terminal device, wherein the capability information comprises a capability of the terminal device to transmit a CA SRS in an inactive state; and
sending the configuration information to the terminal device, wherein the configuration information is used to configure a resource for the terminal device to transmit the CA SRS in the inactive state, and the configuration information is determined based on the capability information.

3. The method according to claim 1 or 2, wherein the configuration information comprises first configuration information and second configuration information, the first configuration information is used to configure a carrier frequency for carrying the CA SRS, the second configuration information is used to configure the resource for the CA SRS, and the resource for the CA SRS corresponds to the carrier frequency for carrying the CA SRS; and the method further comprises:
transmitting, based on the configuration information, the CA SRS at the carrier frequency for carrying the CA SRS.

4. The method according to claim 1 or 2, wherein the configuration information comprises first configuration information and second configuration information, the first configuration information is used to configure a carrier that carries the CA SRS, the second configuration information is used to configure the resource for the CA SRS, and the resource for the CA SRS corresponds to the carrier that carries the CA SRS; and the method further comprises:
transmitting, based on the configuration information, the CA SRS on the carrier that carries the CA SRS.

5. The method according to claim 3 or 4, wherein the second configuration information is carried in the first configuration information.

6. The method according to claim 4, wherein the carrier that carries the CA SRS comprises at least two uplink carriers, and the at least two uplink carriers belong to a same frequency band.

7. The method according to claim 6, wherein the at least two uplink carriers are positioning-dedicated uplink carriers.

8. The method according to claim 4, wherein the first configuration information is further used to configure at least two uplink carriers, at least one uplink carrier in the at least two uplink carriers is an uplink carrier of a cell on which the terminal device camps, and the at least one uplink carrier is used for data transmission.

9. The method according to any one of claims 3 to 8, wherein the first configuration information comprises one or more of the following: frequency channel number information, a bandwidth, a subcarrier spacing SCS, and bandwidth part BWP information.

10. The method according to claim 9, wherein when the frequency channel number information is frequency channel number information of a normal uplink NUL, the first configuration information is used to configure an NUL carrier that carries the CA SRS; or when the frequency channel number information is frequency channel number information of a supplementary uplink SUL, the first configuration information is used to configure an SUL carrier that carries the CA SRS.

11. The method according to any one of claims 4 to 10, wherein the configuration information further comprises a first parameter, and the first parameter indicates available time of a timing advance TA of the carrier that carries the CA SRS.

12. The method according to claim 11, wherein there are at least two carriers that carry the CA SRS, there are at least two pieces of first configuration information, each carrier that carries the CA SRS corresponds to one piece of first configuration information, and the first parameter corresponds to the at least two carriers that carry the CA SRS.

13. The method according to claim 12, wherein there are at least two first parameters, each first parameter corresponds to one carrier that carries the CA SRS, and a plurality of first parameters belong to a same timing advance group TAG.

14. The method according to any one of claims 4 to 13, wherein there are at least two carriers that carry the CA SRS, the configuration information further comprises a second parameter, the second parameter is used to determine whether to send the CA SRS, and the second parameter corresponds to the at least two carriers that carry the CA SRS.

15. The method according to claim 14, wherein the second parameter is associated with a reference signal, and a type of the reference signal comprises one or more of the following: a synchronization signal/physical broadcast channel block SSB, a tracking reference signal TRS, a channel state information-reference signal CSI-RS, and a non-cell-defining synchronization signal/physical broadcast channel block NCD-SSB.

16. The method according to claim 15, wherein the CA SRS is associated with one or more of the following reference signals: the SSB, the TRS, the CSI-RS, and the NCD-SSB, and a sending parameter of the CA SRS is determined based on the reference signal associated with the CA SRS.

17. The method according to claim 16, wherein the sending parameter comprises one or more of the following: whether the CA SRS is sent, transmit power of the CA SRS, and a sending timing of the CA SRS.

18. A communication apparatus, comprising a unit configured to perform the method according to any one of claims 1 to 17.

19. A communication apparatus, comprising a processor, an input interface, and an output interface, wherein the input interface is configured to receive information from a communication apparatus other than the communication apparatus, and the output interface is configured to output information to a communication apparatus other than the communication apparatus, so that the processor is caused to implement the method according to any one of claims 1 to 17.

20. A computer-readable storage medium, wherein the computer-readable storage medium stores a computer program or computer instructions, and when the computer program or the computer instructions are executed by a processor, the method according to any one of claims 1 to 17 is implemented.

21. A computer program product, wherein the computer program product comprises instructions, and when the instructions are executed by a processor, the method according to any one of claims 1 to 17 is implemented.

22. A chip system, comprising at least one processor and an interface circuit, wherein the interface circuit and the at least one processor are interconnected through a line, so that the processor is caused to implement the method according to any one of claims 1 to 17.
